# EUROPEAN PATENT SPECIFICATION

(11) **EP 2 096 545 B1**
(45) Date of publication and mention of the grant of the patent: **04.04.2012**
(21) Application number: 09153325.7
(22) Date of filing: 20.02.2009
(51) Int. Cl.: G06F 11/14

(54) **Method and apparatus for managing the copying of data**
Verfahren und Vorrichtung zur Verwaltung von Datenkopierung
Procédé et appareil de gestion du copiage de données

(30) Priority: 26.02.2008 JP 2008045013
(43) Date of publication of application: 02.09.2009
(73) Proprietor: Buffalo Inc., Nagoya-shi Aichi 457-8520 (JP)
(72) Inventor: Goto, Satoru, Nagoya-shi Aichi 457-8520 (JP)
(74) Representative: Cloughley, Peter Andrew

(56) References cited:
- WO-A2-2007/002397
- US-A1- 2003 182 329
- US-A1- 2007 118 840
- US-A1- 2007 225 962
- US-B1- 7 146 439

## Description

### CROSS-REFERENCE TO RELATED APPLICATIONS

This application is based on and claims the priority from Japanese Patent Application No. 2008-045013 filed on February 26, 2008.

### TECHNICAL FIELD

The present invention relates to a method and apparatus for managing data by a computer that can select a storage destination from a plurality of drives.

### BACKGROUND

In order to improve a fault tolerance of data, it is recommended that a user creates a backup of the data and saves it every time he or she accesses the data. As the storage destinations of the backup, for example, there are a hard disk built in a computer, a USB memory detachably attached to a computer, an external storage that can communicate with a computer by radio or cable through a network.

As an example of such external storage, there exists a network attached storage (NAS). An example of the technology to construct the network equipped with such NASs is disclosed in JP-A-2005-267233, corresponding to document US 2005/0290 080.

Document US2003/0182329 discloses a back-up method, in which a first file and a replica second file, which is a copy of the first file, are synchronized. When the first file is closed, it is locked and the synchronization between the first and second files is stopped and the first file then unlocked. A third backup, file is then created, which is a copy of the second file. This third file is called a fixed file. Following this, the synchronization between the first and second files is resumed, so that any further edits of the file can be copied onto the replica files (second files).

Each time the original file is updated, a new fixed file is created. Creation of the fixed files may take place, e.g., every four hours. It therefore appears that the creation of the fixed files is asynchronous with respect to the editing of the original file by the user.

It is troublesome for a user of the computer to create a backup of data every time he or she accesses the data. Besides, when the backup data must be saved in the above NAS, it may take much time as a whole to access the data in the NAS. This is because a data access rate of the NAS itself is generally slower than that of the internal storage of a computer, and also because the NAS is connected to the computer via the network.

Therefore, the user is negligent in making the backup of data on account of troublesome, time-consuming operation, and the like.

### SUMMARY

The present invention was made in consideration of the above circumstances, and an object of the present invention is to provide method and apparatus for managing data to improve operability of the user in operating a computer that can select a storage destination of a file from a plurality of drives.

According to a first aspect of the invention, there is provided a method for managing data by a computer capable of selecting a storage destination of a file from a plurality of drives including a first drive and a second drive, said method comprising: carrying out an editing operation on each of one or more target files in the first drive in accordance with an input from a user; listing on a task list one or more tasks as unprocessed tasks to be processed, each of the one or more tasks comprising an editing operation in association with a name of the target file; and creating a copy of the edited one or more target files in the second drive by sequentially processing the unprocessed tasks listed on the task list, said sequential processing being carried out asynchronously with respect to the editing operations in the first drive.

According to a second aspect of the invention, there is provided an apparatus for managing data of files stored in a plurality of data storage drives including a first drive and a second drive, the apparatus capable of selecting a storage destination of the file from the plurality of data storage drives, said apparatus for managing data comprising: editing means for carrying out an editing operation on each of one or more target files in the first drive in accordance with an input from a user; listing means for listing on a task list one or more tasks as unprocessed tasks to be processed, each of the one or more tasks comprising an editing operation in association with a name of the target file; and backup means for creating a copy of the edited one or more target files in the second drive by sequentially processing the unprocessed tasks listed on the task list, said backup unit means being adapted to carry out said sequential processing asynchronously with respect to the editing operations in the first drive.

According to a third aspect of the invention, there is provided a computer-readable medium having a computer program stored thereon and readable by a computer, said computer program, when executed by the computer, causes the computer to perform operations comprising: carrying out an editing operation on each of one or more target files in a first drive by the computer in accordance with an input from a user; listing on a task list one or more tasks as unprocessed tasks to be processed, each of the one or more tasks comprising an editing operation in association, with a name of the target file; and creating a copy of the edited one or more target files in a second drive by sequentially processing the unprocessed tasks listed on the task list, said sequential processing being carried out asynchronously with respect to the editing operations in the first drive.

### BRIEF DESCRIPTION OF THE DRAWINGS

FIG. 1 is a schematic diagram showing a network system according to an embodiment of the present invention;

FIG. 2 is a block diagram schematically showing a hardware configuration of a personal computer (PC) shown in FIG. 1;

FIG. 3 is a block diagram schematically showing a hardware configuration of a Network Attached Storage (NAS) shown in FIG. 1;

FIG. 4 is a flowchart schematically showing an editing program executed in each PC shown in FIG. 1;

FIG. 5 is a view showing an example of a task list made up by the execution of step S5 shown in FIG. 4;

FIG. 6 is a flowchart schematically showing a backup program executed in each PC shown in FIG. 1; and

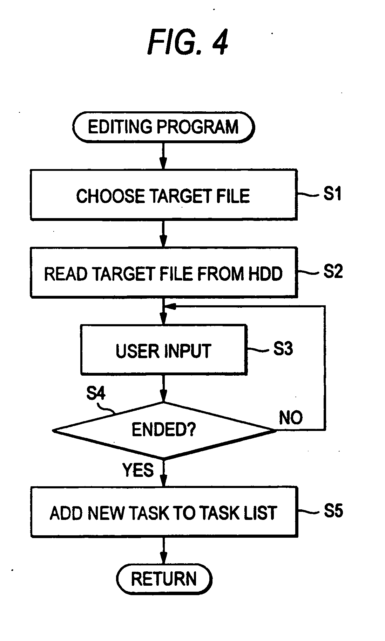

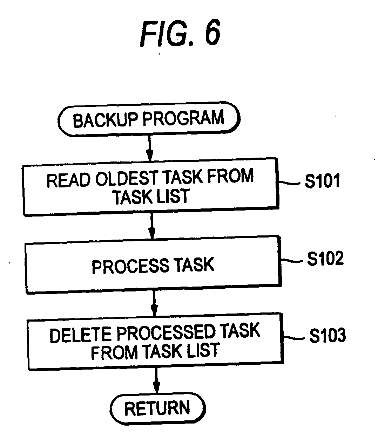

FIGs . 7A to 7C are views explaining how the contents of the task list are changed when the editing program shown in FIG. 4 and the backup program shown in FIG. 6 are executed.

### DESCRIPTION

One of more illustrative embodiments of the present invention will be explained in detail with reference to the drawings hereinafter.

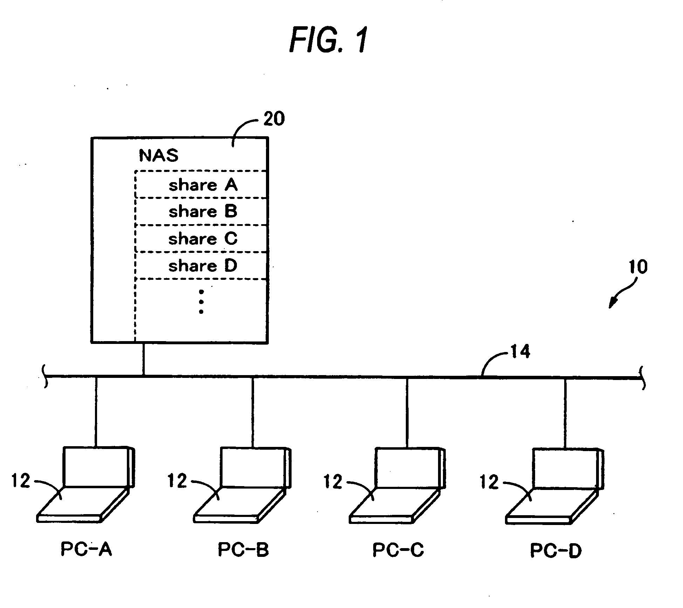

FIG. 1 schematically shows an example of a network system in which a method for managing data according to an embodiment of the present invention can be executed.

In a network system 10, four personal computers (hereinafter referred to as "PCs") 12 are connected via a wireless or wired network (for example, LAN, WAN, Internet, or the like) to communicate mutually.

The PCs 12 are employed by the user respectively. For convenience of explanation, "PC-A", "PC-B", "PC-C", and "PC-D" denote respective PCs.

One NAS (Network Attached Storage) 20 is connected to a network 14. The NAS 20 is set to be shared with four PCs 12. Therefore, each PC 12 can access the NAS 20.

In this case, the NAS 20 includes a dedicated memory area for each corresponding PC 12. Specifically, the NAS 20 includes four memory areas "share A", "share B", "share C", and "share D", and the "PC-A", the "PC-B", the "PC-C", and the "PC-D" are allocated to these memory areas, respectively. The memory areas may be allocated in advance.

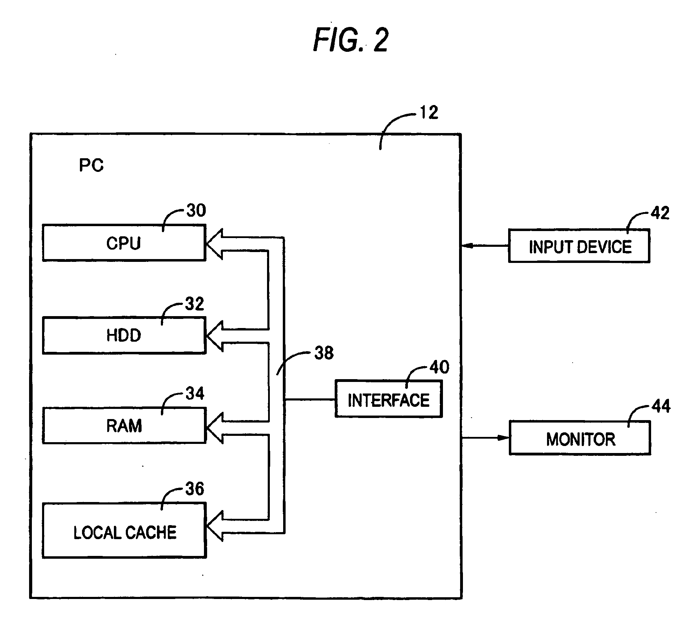

FIG. 2 is a block diagram schematically showing the hardware configuration of a representative one of the four PCs 12. In the PC 12, a CPU (an example of a processor) 30, a hard disk drive (abbreviated as "HDD hereinafter) 32, a RAM 34, and a local cache 36 are interconnected via a bus 38.

The program to establish an operation system of the PC 12 and various application programs are prestored in the HDD 32. A required program such as an application program can be installed into the HDD 32 by using an external recording medium or by online.

An interface 40 is connected to the bus 38. The PC 12 can be connected to the network 14, peripheral equipments, and/or external devices via the interface 40.

As the peripheral equipments, there are an input device 42 and a monitor 44. The input device 42 includes, for example, a mouse, a key board, and the like to to enable the user to carry out the input operation. The monitor 44 includes a screen to display information visually.

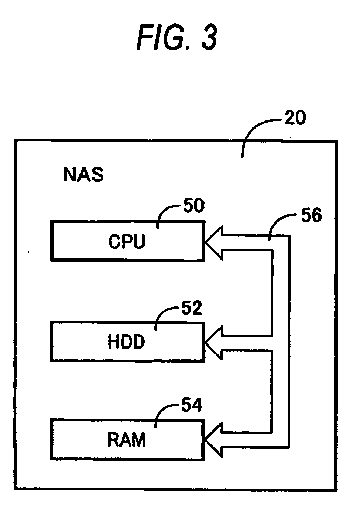

FIG. 3 is a block diagram schematically showing a hardware configuration of the NAS 20.

The NAS 20 includes a CPU 50, a hard disk drive (HDD) 52, and a RAM 54. The CPU 50, the HDD 52, and the RAM 54 are interconnected via a bus 56. Generally, the HDD 52 is a low-speed access drive as compared with the HDD 32. Further, the NAS 20 may include a plurality of HDDs 52.

An editing program schematically shown in a flowchart in FIG. 4 is stored in the HDD 32 of each PC 12. The editing program is executed repeatedly by the CPU 30 during operation of each PC 12.

On executing the editing program shown in FIG. 4 every time, in step S1, a file in the HDD 32 (first drive) is chosen as a target file, in accordance with a user's input via the input device 42. When the same file has already been saved in the HDD 32, such file is chosen. In contrast, when the same file does not exist in the HDD 32 yet, this file is newly created in the HDD 32.

Next, in step S2, the target file is read from HDD 32 of the PC 12.

Then, in step S3, the input to edit (e.g., change, delete, or the like) the target file in the HDD 32 is entered by the user via the input device 42. When a series of editing operations applied to the target file is ended (step S4: YES), the process proceeds to step S5. For example, when the user inputs an editing end command (e.g., a command "save") indicating that a series of editing operations are completed, it is determined that the series of editing operations is ended.

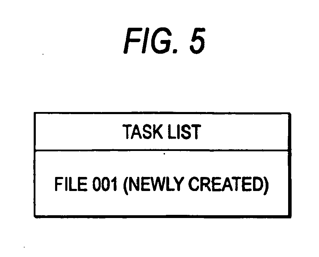

In step S5, the content of the edit applied to the target file is added to a task list as a new task. For example, when the target file is file 001 and this file 001 is the file created newly this time, the name of the file in association with information indicating that this file has been newly created is added to the task list as shown in FIG. 5.

In this case, information to specify a location of a memory area (any one of "share A", "share B", "share C", and "share D"), which is designated in the NAS 20 to save a copy of the target file in the NAS 20 (second drive), is added to the task list.

With the above, one cycle of the execution of the editing program is ended.

A backup program schematically shown in a flowchart in FIG. 6 is stored in the HDD 32 of each PC 12. The backup program is executed repeatedly during operation of each PC by the CPU 30, independently of an execution timing of the foregoing editing program.

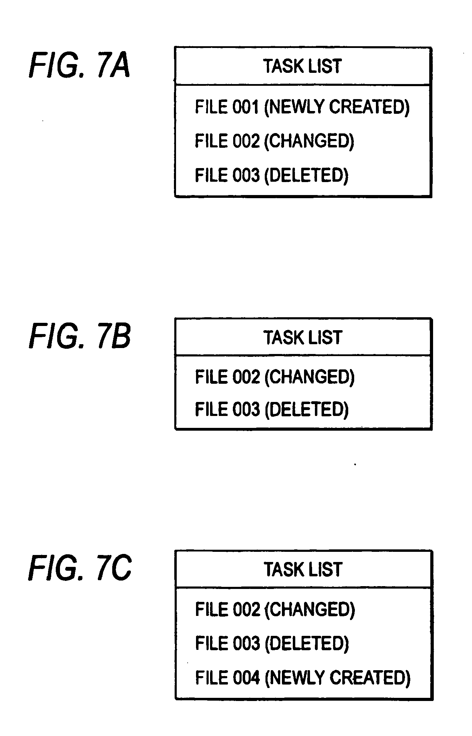

In executing the backup program shown in FIG. 6 each time, in step S101, the oldest task (unprocessed task) is read from the task list. For example, in an example shown in FIG. 7A, a task "file 001 (newly created)" is read as the oldest task.

Then, in step S102, the task that is read is processed. Specifically, the same edit as that applied to the file (file in the HDD 32) of the current task by executing the above editing program is applied to the corresponding file in the corresponding memory area of the NAS 20. As a result, a copy of the file in the HDD 32 is created in the NAS 20, and accordingly, the file in the HDD 32 is backed up.

For example, in the example shown in FIG. 7A, in order to process the task "file 001 (newly created)", a signal for newly creating a copy of the "file 001" stored in the HDD 32 in the NAS 20 (containing the data indicating the "file 001") is transmitted to the NAS 20.

In contrast, in the example shown in FIG. 7A, in order to process a task "file 002 (changed)", a signal for overwriting the existing file in the NAS 20 (the file corresponding to the "file 002") by the same data as that in the file 002 on the HDD 32 (containing the data indicating the "file 002") is transmitted to the NAS 20. Accordingly, a copy of the file 002 is created in the NAS 20.

In contrast, in the example shown in FIG. 7A, in order to process a task "file 003 (deleted)", a signal for deleting the existing file in the NAS 20 (the file corresponding to the "file 003") is transmitted to the NAS 20.

Then, in step S103, the task that has been processed by executing the process in step S102 is deleted from the task list. For example, in the example shown in FIG. 7A, after the task "file 001 (newly created)" is processed, the processed task is not present in the task list, as shown in FIG. 7B. Thus, the task to be processed next comes to the top of the existing tasks.

Further, when a new task "file 004 (newly created) " occurs thereafter in a state shown in FIG. 7B, this task is added to the bottom of the existing tasks as shown in FIG. 7C.

With the above, one cycle of the execution of the backup program is ended.

According to the present embodiment, in response to the edit (revision) of the target file in the HDD 32 of the PC 12 by executing the above-mentioned editing program, the contents of the edit (revision) are transferred to the backup program through the task list.

The backup program processes sequentially a plurality of tasks, which are listed on the task list in chronological order, in asynchronism with the above editing program. Consequently, a copy of the target file in the HDD 32 of the PC 12 is created in the NAS 20 as a backup copy.

Therefore, according to the present embodiment, individual editing operations are applied not to the HDD 52 of the NAS 20 but to the HDD 32 of the PC 12. As a result, even though a data access rate in the HDD 52 of the NAS 20 is slower than that in the HDD 32 of the PC 12, the data access rate can be improved.

Further, according to the present embodiment, the same data can be saved in the HDD 32 of the PC 12 and the HDD 52 of the NAS 20. As a result, the multiplexing of data can be achieved, and thus a fault tolerance of data can be improved.

According to the embodiment of the invention, the following exemplified aspects can also be obtained.

(1) A method for managing data by a computer capable of selecting a storage destination of a file from a plurality of drives including a first drive and a second drive, said method comprises: editing a target file in the first drive in accordance with an input from a user; listing one or more tasks as unprocessed tasks to be processed on a task list, each of the one or more tasks comprising a content of an edit applied to the target file in association with a name of the target file; and creating a copy of the target file in the second drive by sequentially processing the unprocessed tasks listed on the task list independently of a flow of editing the target file.

(2) The method according to the item (1) may further comprise deleting the task, which has been processed, from the task list.

(3) In the method according to the item (1) or (2), the one or more tasks may be listed on the task list in time series.

An example of editing the target file may include steps S1 to S4 in FIG. 4, an example of listing the task may include step S5 in FIG. 4, an example of creating the copy may include steps S101 and S102 in FIG. 6, and an example of deleting the task may include step S103 in FIG. 6.

Further, an example of the first drive may include the HDD 32 of the PC 12, and an example of the second drive may include the HDD 52 of the NAS 20.

According to this method, the user can create a copy of the target file in the first drive automatically in the second drive, and thus can back up automatically the data.

Further, according to this method, the editing operation of the target file in the first drive is executed independently of the creating operation of a copy of the target file on the second drive. Therefore, even when an access rate of the second drive as the backup destination is slower than that of the first drive, the user can effectively edit the target file in the first drive, irrespective of an access rate of the second drive.

In the present specification, the term "edit" can be interpreted to mean not only partial addition, change, or deletion to an existing file but also all acts applied to change the contents, e.g., creation of a new file, deletion of the existing file, and others.

The computer may be any kinds of the computers, such as a desktop computer (e.g. , a personal computer) and a portable computer (e.g., PDA, cellular phone).

(4) In the data managing method according to any of the items (1) to (3), the first drive may be either the internal drive or the external drive of the computer, and the second drive may be either the internal drive or the external drive of the computer.

(5) In the data managing method according to the item (4), the external drive may include at least one of a USB supported storage that is directly connectable to the computer, and an NAS that is capable of communicating with the computer by radio or cable via the network. The USB supported storage may be a USB memory, USB flash, and the like.

(6) In the data managing method according to any of the items (1) to (5), the first drive may comprise a high-speed access storage that allows data reading/writing operations at a first speed, and the second drive may comprise a low-speed access storage that allows data reading/writing operations at a second speed which is slower than the first speed.

(7) In the data managing method according to the item (6), the first drive is an internal drive provided in the computer and the second drive is an external drive of the computer.

(8) A program, when executed by a computer, enables the computer to perform the method in any of the items (1) to (7).

When this program is executed by the computer, the similar advantages can be obtained in accordance with the principle that is basically similar to the method according to any of the items (1) to (7).

The program may include not only a combination of commands executed by the computer to fulfill the function of the program but also files and data processed in accordance with each command.

Further, this program can be formulated to attain a desired object when this program is executed solely by the computer, or attain a desired object when this program is executed along with other programs by the computer. In the latter case, the program according to the present case can be formulated to handle the data mainly.

(9) A computer-readable medium having a program of the item (8) stored thereon.

When the program recorded in this computer-readable medium is executed by the computer, the advantages similar to those in the method according to any one of the items (1) to (7) can be achieved.

Various types of computer-readable medium can be employed as this computer-readable medium. For example, any one of a magnetic recording medium such as a flexible disk, or the like, an optical recording medium such as CD, CD-ROM, or the like, a magneto-optical disc such as MO, or the like, an unremovable storage such as ROM, or the like, and others can be employed.

It may be considered that the editing program shown in FIG. 4 in conjunction with the backup program shown in FIG. 6 configure an example of the "program", and that the HDD 32 that stores such editing program the backup program configures an example of the "recording medium".

(10) An apparatus for managing data of files stored in a plurality of data storage drives including a first drive and a second drive, the apparatus capable of selecting a storage destination of the file from the plurality of data storage drives, said apparatus for managing data comprises: editing means for editing a target file in the first drive in accordance with an input from a user; listing means for listing one or more tasks as an unprocessed task to be processed on a task list, each of the one or more tasks comprising a content of an edit applied to the target file in association with a name of the target file; and backup means for creating a copy of the target file in the second drive by sequentially processing the one or more tasks listed on the task list independently of a flow of editing the target file.

(11) The apparatus according to the item (10) may further comprise input means for enabling the user of the apparatus to input data to the apparatus.

(12) The apparatus according to the item (10) or (11) may further comprise deleting means for deleting the task, which has been processed by the backup means, from the task list.

(13) In the apparatus according to any of the items (10) to (12), the one or more tasks may be listed on the task list in time series.

While the present invention has been shown and described with reference to certain exemplary embodiments thereof, it will be understood by those skilled in the art that various changes in form and details may be made therein without departing from the scope of the invention as defined by the appended claims.

Besides, in the present embodiment, a copy of the most up-to-date version of the target file is created in the NAS 20 in response to the event that a series of latest editing operations applied to the target file in each PC 12 are ended. However, the present invention is not limited thereto, and the most up-to-date version of copy of the target file in each PC 12 may be created periodically in the NAS 20 every time after a predetermined time (e.g., about 5 minute) has elapsed.

In the above-described embodiment, the unprocessed tasks are listed in time series. However, the present invention is not limited thereto, and the unprocessed tasks may be listed in the order according to a given condition based, for example, on a storage destination designated to store the file corresponding to the task, the capacity (or remaining capacity) of the storage destination, or the capacity (size) of the target file.

In the above-described embodiment, the unprocessed tasks are processed subsequently from the top of the task list. However, the present invention is not limited thereto, and the unprocessed tasks may be processed in the order according to a given condition based, for example, on a storage destination designated to store the file corresponding to the task.

In the above-described embodiment, the task having been processed is deleted from the task list, but the present invention is not limited thereto. For example, information indicating that a task has been processed may be added to the corresponding task on the task list, and the PC may select a task not associated with the information as a target for processing the task (as an unprocessed task).

## Claims

1. A method for managing data by a computer (12) capable of selecting a storage destination of a file from a plurality of drives including a first drive (32) and a second drive (52), said method comprising:
carrying out an editing operation (S3) on each of one or more target files in the first drive (32) in accordance with an input from a user;
listing (S5) on a task list one or more tasks as unprocessed tasks to be processed, each of the one or more tasks comprising an editing operation in association with a name of the target file; and
creating a copy of the edited one or more target files in the second drive (52) by sequentially processing (S101, S102) the unprocessed tasks listed on the task list, said sequential processing being carried out asynchronously with respect to the editing operations in the first drive (32).

2. The method according to claim 1, further comprising deleting (S103) the task, which has been processed, from the task list.

3. The method according to claim 1 or claim 2, wherein one or more tasks are listed on the task list in time series.

4. The method according to any one of claims 1 to 3, wherein the second drive (52) comprises at least one of: a USB supported storage device connectable to the computer (12), and a Network Attached Storage (20) capable of communicating with the computer via a network (14).

5. The method according to any one of claims I to 4, wherein the first drive (32) comprises a high-speed access storage that allows data reading/writing operations at a first speed, and the second drive (52) comprises a low-speed access storage that allows data reading/writing operations at a second speed slower than the first speed.

6. The method according to claim 5. wherein the first drive (32) is an internal drive provided in the computer (12) and the second drive (52) is an external drive of the computer.

7. An apparatus (12) for managing data of files stored in a plurality of data storage drives including a first drive (32) and a second drive (52), the apparatus capable of selecting a storage destination of the file from the plurality of data storage drives, said apparatus for managing data comprising:
editing means for carrying out an editing operation on each of one or more target files in the first drive (32) in accordance with an input from a user:
listing means for listing on a task list one or more tasks as unprocessed tasks to be processed, each of the one or more tasks comprising an editing operation in association with a name of the target file; and
backup unit means for creating a copy of the edited one or more target files in the second drive (52) by sequentially processing the unprocessed tasks listed on the task list, said backup unit means being adapted to carry out said sequential processing asynchronously with respect to the editing operations in the first drive (32).

8. The apparatus according to claim 7, further comprising input means (42) for enabling the user of the apparatus to input data to the apparatus.

9. The apparatus according to claim 7 or 8, further comprising deleting means for deleting the task, which has been processed by the backup means, from the task list.

10. The apparatus according to any one of claims 7 to 9, wherein the one or more tasks are listed on the task list in time series.

11. A computer-readable medium having a computer program stored thereon and readable by a computer (12), said computer program, when executed by the computer, causes the computer to perform operations comprising:
carrying out editing operation (53) on each of one or more target files in a first drive (32) by the computer (12) in accordance with an input from a user;
listing (S5) on a task list one or more tasks as unprocessed tasks to be processed, each of the one or more tasks comprising an editing operation in association with a name of the target file; and
creating a copy of the edited one or more target files in a second drive (52) by sequentially processing (S101, S102) the unprocessed tasks listed on the task list, aid sequential processing being carried out asynchronously with respect to the editing operations in the first drive (32).

## Patentansprüche

1. Verfahren zum Verwalten von Daten durch einen Computer (12), welcher einen Speicherort einer Datei aus einer Vielzahl von Laufwerken einschließlich eines ersten Laufwerks (32) und eines zweiten Laufwerks (52) auswählen kann, wobei das Verfahren umfasst:
Durchführen eines Editiervorgangs (S3) mit jeder von einer oder mehreren Zieldateien auf dem ersten Laufwerk (32) gemäß einer Eingabe eines Benutzers;
Listen (S5) einer oder mehrerer Aufgaben auf einer Aufgabenliste als zu bearbeitende unbearbeitete Aufgaben, wobei jede der einen oder mehreren Aufgaben einen Editiervorgang in Zusammenhang mit einem Namen einer Zieldatei umfasst; und
Erzeugen einer Kopie der editierten einen oder mehreren Zieldateien auf dem zweiten Laufwerk (52) durch sequentielles Bearbeiten (S101, S102) der unbearbeiteten Aufgaben, die auf der Aufgabenliste gelistet sind, wobei das sequentielle Bearbeiten in Bezug auf die Editiervorgänge auf dem ersten Laufwerk (32) asynchron durchgeführt wird.

2. Verfahren gemäß Anspruch 1, welches des Weiteren das Löschen (S103) der Aufgabe, welche bearbeitet wurde, von der Liste umfasst.

3. Verfahren gemäß Anspruch 1 oder Anspruch 2, wobei eine oder mehrere Aufgaben auf der Aufgabenliste in Zeitreihen gelistet ist/sind.

4. Verfahren gemäß einem der Ansprüche 1 bis 3, wobei das zweite Laufwerk (52) mindestens eines umfasst aus: einer USB unterstützten Speichervorrichtung, die mit dem Computer (12) verbindbar ist, und einem Netzwerk verbundenem Speicher (Network Attached Storage) (20), der mit dem Computer über ein Netzwerk kommunizieren kann.

5. Verfahren gemäß einem der Ansprüche 1 bis 4, wobei das erste Laufwerk (32) einen Hochgeschwindigkeitsverbindungsspeicher umfasst, welcher Datenlese-/Datenschreibvorgänge bei einer ersten Geschwindigkeit ermöglicht, und wobei das zweite Laufwerk (52) einen Niedriggeschwindigkeitsverbindungsspeicher umfasst, der Datenlese-/Datenschreibvorgänge bei einer zweiten Geschwindigkeit ermöglicht, welche langsamer ist als die erste Geschwindigkeit.

6. Verfahren gemäß Anspruch 5, wobei das erste Laufwerk (32) ein internes Laufwerk ist, welches in dem Computer (12) bereitgestellt ist, und wobei das zweite Laufwerk (52) ein externes Laufwerk des Computers ist.

7. Gerät (12) zum Verwalten von Daten von Dateien, welche in einer Vielzahl von Datenspeicherlaufwerken gespeichert sind, welche ein erstes Laufwerk (32) und ein zweites Laufwerk (52) umfassen, wobei das Gerät einen Speicherort der Datei aus der Vielzahl von Datenspeicherlaufwerken auswählen kann, wobei das Gerät zum Verwalten von Daten umfasst:
Editiermittel zum Durchführen eines Editiervorgangs mit jeder von einer oder mehreren Zieldateien auf dem ersten Laufwerk (32) gemäß einer Eingabe eines Benutzers;
Listmittel zum Listen einer oder mehrere Aufgaben auf einer Aufgabenliste als zu bearbeitende unbearbeitete Aufgaben, wobei jede der einen oder mehreren Aufgaben einen Editiervorgang in Zusammenhang mit einem Namen einer Zieldatei umfasst; und
Backup-Einheit-Mittel zum Erzeugen einer Kopie der editierten einen oder mehreren Zieldateien auf dem zweiten Laufwerk (52) durch sequentielles Bearbeiten der unbearbeiteten Aufgaben, die auf der Aufgabenliste gelistet sind, wobei das Backup-Einheit-Mittel geeignet ist, das sequentielle Bearbeiten in Bezug auf die Editiervorgänge auf dem ersten Laufwerk (32) asynchron durchzuführen

8. Gerät gemäß Anspruch 7, welches des Weiteren Eingabemittel (42) umfasst, um es dem Benutzer des Geräts zu ermöglichen, Daten in das Gerät einzugeben.

9. Gerät gemäß Anspruch 7 oder 8, welches des Weiteren Löschmittel zum Löschen der Aufgabe von der Aufgabenliste umfasst, die durch das Backup-Mittel bearbeitet wurde.

10. Gerät gemäß einem der Ansprüche 7 bis 9, wobei die eine oder mehreren Aufgaben in der Aufgabenliste in Zeitserien gelistet ist/sind.

11. Computerlesbares Medium, welches ein darauf gespeichertes Computerprogramm aufweist und welches von einem Computer (12) lesbar ist, wobei das Computerprogramm, wenn es von dem Computer ausgeführt wird, den Computer dazu bringt, Vorgänge durchzuführen, umfassend:
Durchführen von Editiervorgängen (53) mit jeder von einer oder mehreren Zieldateien auf einem ersten Laufwerk (32) durch den Computer (12) gemäß einer Eingabe eines Benutzers;
Listen (S5) einer oder mehrere Aufgaben auf einer Aufgabenliste als zu bearbeitende unbearbeitete Aufgaben, wobei jede der einen oder mehreren Aufgaben einen Editiervorgang in Zusammenhang mit einem Namen der Zieldatei umfasst; und
Erzeugen einer Kopie der editierten einen oder mehreren Zieldateien auf dem zweiten Laufwerk (52) durch sequentielles Bearbeiten (S101, S102) der unbearbeiteten Aufgaben, die auf der Aufgabenliste gelistet sind, wobei das sequentielle Bearbeiten in Bezug auf die Editiervorgänge auf dem ersten Laufwerk (32) asynchron durchgeführt wird.

## Revendications

1. Procédé pour gérer des données par un ordinateur (12) capable de sélectionner une destination de stockage d'un fichier parmi une pluralité de lecteurs incluant un premier lecteur (32) et un second lecteur (52), ledit procédé comprenant :
l'exécution d'une opération d'édition (S3) sur chacun d'un ou plusieurs fichiers cibles dans le premier lecteur (32) conformément à une entrée d'un utilisateur ;
le listage (S5) sur une liste de tâches d'une ou plusieurs tâches comme des tâches non traitées devant être traitées, chacune des une ou plusieurs tâches comprenant une opération d'édition en association avec un nom du fichier cible ; et
la création d'une copie des un ou plusieurs fichiers cibles édités dans le second lecteur (52) en traitant séquentiellement (S101, S102) les tâches non traitées listées sur la liste de tâches, ledit traitement séquentiel étant exécuté de façon asynchrone par rapport aux opérations d'édition dans le premier lecteur (32).

2. Procédé selon la revendication 1, comprenant en outre la suppression (S103) de la tâche, qui a été traitée, de la liste de tâches.

3. Procédé selon la revendication 1 ou la revendication 2, dans lequel une ou plusieurs tâches sont listées sur la liste de tâches en série chronologique.

4. Procédé selon l'une quelconque des revendications 1 à 3, dans lequel le second lecteur (52) comprend au moins un entre : un dispositif de stockage USB supporté connectable à l'ordinateur (12), et un stockage en réseau NAS (20) capable de communiquer avec l'ordinateur via un réseau (14).

5. Procédé selon l'une quelconque des revendications 1 à 4, dans lequel le premier lecteur (32) comprend un stockage à accès haute vitesse qui permet des opérations de lecture/écriture de données à une première vitesse, et le second lecteur (52) comprend un stockage à accès basse vitesse qui permet des opérations de lecture/écriture de données à une seconde vitesse plus lente que la première vitesse.

6. Procédé selon la revendication 5, dans lequel le premier lecteur (32) est un lecteur interne pourvu dans l'ordinateur (12) et le second lecteur (52) est un lecteur externe de l'ordinateur.

7. Appareil (12) pour gérer des données de fichiers stockés dans une pluralité de lecteurs de stockage de données incluant un premier lecteur (32) et un second lecteur (52), l'appareil capable de sélectionner une destination de stockage du fichier parmi la pluralité de lecteurs de stockage de données, ledit appareil pour gérer des données comprenant :
des moyens d'édition pour exécuter une opération d'édition sur chacun d'un ou plusieurs fichiers cibles dans le premier lecteur (32) conformément à une entrée d'un utilisateur ;
des moyens de listage pour lister sur une liste de tâches une ou plusieurs tâches comme des tâches non traitées devant être traitées, chacune des une ou plusieurs tâches comprenant une opération d'édition en association avec un nom du fichier cible ; et
des moyens d'unité de sauvegarde pour créer une copie des un ou plusieurs fichiers cibles édités dans le second lecteur (52) en traitant séquentiellement les tâches non traitées listées sur la liste de tâches, lesdits moyens d'unité de sauvegarde étant adaptés pour exécuter ledit traitement séquentiel de façon asynchrone par rapport aux opérations d'édition dans le premier lecteur (32).

8. Appareil selon la revendication 7, comprenant en outre des moyens d'entrée (42) pour permettre à l'utilisateur de l'appareil d'entrer des données dans l'appareil.

9. Appareil selon la revendication 7 ou 8, comprenant en outre des moyens de suppression pour supprimer la tâche, qui a été traitée par les moyens de sauvegarde, de la liste de tâches.

10. Appareil selon l'une quelconque des revendications 7 à 9, dans lequel les une ou plusieurs tâches sont listées sur la liste de tâches en série chronologique.

11. Support lisible par ordinateur ayant un programme informatique stocké dessus et lisible par un ordinateur (12), ledit programme informatique, lorsqu'il est exécuté par l'ordinateur, amène l'ordinateur à effectuer des opérations comprenant :
l'exécution d'une opération d'édition (S3) sur chacun d'un ou plusieurs fichiers cibles dans un premier lecteur (32) par l'ordinateur (12) conformément à une entrée d'un utilisateur ;
le listage (S5) sur une liste de tâches d'une ou plusieurs tâches comme des tâches non traitées devant être traitées, chacune des une ou plusieurs tâches comprenant une opération d'édition en association avec un nom du fichier cible ; et
la création d'une copie des un ou plusieurs fichiers cibles édités dans un second lecteur (52) en traitant séquentiellement (S101, S102) les tâches non traitées listées sur la liste de tâches, ledit traitement séquentiel étant exécuté de façon asynchrone par rapport aux opérations d'édition dans le premier lecteur (32).
